# EUROPÄISCHE PATENTSCHRIFT

(11) **EP 2 442 037 B1**
(45) Veröffentlichungstag und Bekanntmachung des Hinweises auf die Patenterteilung: **01.06.2016**
(21) Anmeldenummer: 10013541.7
(22) Anmeldetag: 12.10.2010
(51) Int. Cl.: F24D 19/10, F24D 19/00

(54) **Verfahren zur Regelung einer Heizungsanlage**
Method for regulating a heating assembly
Procédé de réglage d'une installation de chauffage

(43) Veröffentlichungstag der Anmeldung: 18.04.2012
(73) Patentinhaber: Active Building Technologies Intelligent Systems, S.L.U., 07009 Palma de Mallorca (ES)
(72) Erfinder: Vogel, Holger, 07160 Peguera/Mallorca (ES)
(74) Vertreter: Sasse, Stefan

(56) Entgegenhaltungen:
- EP-A1- 0 864 955
- EP-A2- 1 953 460
- WO-A2-2009/072744
- DE-A1- 4 124 304
- US-A1- 2010 045 470

## Beschreibung

Die Erfindung betrifft ein Verfahren zur Regelung, welches in einer Anlage ausgeführt wird, die einen Sonnenkollektor als Leistungsquelle, eine Pumpe, eine Hauptleitung und mindestens ein Ventil in einem Heizkreislauf sowie mehrere Verbraucher aufweist, wobei die Hauptleitung zumindest teilweise von einem fluiden Energieträgermedium durchflossen ist, die Leistungsquelle darauf eingerichtet ist, eine bestimmte, insbesondere die maximal verfügbare, momentane Leistung (Abgabeleistung) an das Energieträgermedium zu übertragen, und die Verbraucher jeweils einen momentanen Leistungsbedarf (Aufnahmeleistung) aufweisen.

### Stand der Technik

Eine derartige Anlage ist aus der DE 4124304 A1 bekannt. Bei der bekannten Heizungsanlage sind mehrere Verbraucher mit verschiedenen Temperaturniveaus mit dem Heizkreislauf verschaltet. Jedem Verbraucher zugeordnet ist ein Dreiwegeventil, durch das zumindest ein Teilstrom des Heizkreislaufes an den Verbraucher gelenkt werden kann. Der übrige Teilstrom durchfließt einen parallel zum Verbraucher angeordneten Bypass und vermischt sich mit dem rückfließenden Volumenstrom des Verbrauchers und fließt sodann zu dem nächsten Ventil eines weiteren Verbrauchers. Die Verschaltung des zweiten Dreiwegeventils und des weiteren Verbrauchers mit dem Heizkreislauf ist analog zu dem ersten Verbraucher. In entsprechender Weise können beliebig viele weitere Verbraucher mit dem Heizkreislauf verschaltet sein. Ein fluides Energieträgermedium des Heizkreislaufes kann deshalb die Verbraucher In Serie und/oder parallel durchfließen. Wärmeenergie des Energieträgermediums, welche nicht an den Verbraucher abgegeben wird, kann vorzugsweise mit einem Teilstrom aus der Bypassleitung an einen nachgeschalteten Verbraucher mit einem niedrigeren Temperaturniveau weitergeleitet werden. Von dem letzten Verbraucher fließt das fluide Energieträgermedium zurück zur Leistungsquelle.

Bei Heizungsanlagen sinkt die Temperatur des Energieträgermediums beim Durchfließen eines Verbrauchers ab. Um die Energie des fluiden Energieträgermediums, welches den zuvor genannten Verbraucher verlässt, auch für weitere Verbraucher nutzen zu können, können diesem Verbraucher nur jene Verbraucher nachgeschaltet sein, die ein niedrigeres Temperatumiveau aufweisen. Zusammenfassend betrachtet sinkt die Temperatur des Energieträgermediums beim Durchfließen der Verbraucher kontinuierlich ab. Bei bekannten Heizungsanlagen wird deshalb die Abgabetemperatur des Energieträgermediums aus der Leistungsquelle an die Vorlauftemperaturanforderungen des Abnehmers angepasst, dessen Temperaturanforderung am höchsten ist. Mit anderen Worten ist die Abgabetemperatur mindestens so hoch wie die höchste Vorlauftemperaturanforderung der Verbraucher der Heizungsanlage.

Die Nutzung alternativer Energiequellen, wie Sonnenenergie, Erdwärme und/oder die Wärme (Abwärme) von industriellen Prozessen, für Heizungsanlagen zur Erwärmung von Energieträgermedien ist ebenfalls bekannt. Zur Nutzung der Sonnenergie sind vorzugsweise Sonnenkollektoren bekannt. Die Übertragung einer Energie der Sonne an das fluide Energieträgermedium kann hierbei von vielen verschiedenen Faktoren abhängen. Dies können vorzugsweise der Volumenstrom durch den Kollektor, die Lichtintensität und/oder die Kollektorfläche sein. Eine Veränderung der Leistung der Pumpe im Heizkreislauf und damit des Volumenstroms des Energieträgermediums durch den Heizkreislauf kann zu einer deutlichen Veränderung der Abgabeleistung an das Energieträgermedium führen. Beispielsweise kann die Abgabelelstung der Leistungsquelle 500 Watt betragen, wenn das Energieträgermedium die Leistungsquelle mit 60°C und einem Volumenstrom von 300 Litern pro Minute verlässt. In einer anderen Konfiguration kann die Abgabeleistung 700 Watt sein, wenn das Energieträgermedium die Leistungsquelle mit 40°C und einem Volumenstrom von 600 Litern pro Minute verlässt. Wird also beilspielsweise die Leistung der Pumpe gedrosselt und damit der Volumenstrom durch die Leistungsquelle, so erhöht sich das Temperaturniveau des Energieträgermediums, welches die Leistungsquelle verlässt, und die Abgabeleistung sinkt.

### Aufgabenstellung:

Der vorliegenden Erfindung liegt die Aufgabe zugrunde, die bekannten Verfahren zur Regelung, welche in einer Heizanlage ausgeführt werden, zu verbessern, sodass eine möglichst hohe Leistung einer Leistungsquelle an zumindest einen Verbraucher übertragbar ist

### Beschreibung:

Die Aufgabe wird erfindungsgemäßen durch ein Verfahren nach Anspruch 1 gelöst. Weitere Merkmale, Vorteile und/oder Einzelheiten der Erfindung sind in den Unteransprüchen beschrieben.

Aus dem Stand der Technik war es bisher durchaus bekannt, dass die Abgabeleistung einer Leistungsquelle von verschiedenen Parametern, insbesondere der Heizungsanlage, abhängt. Ein ähnlicher Zusammenhang gilt auch für die Temperatur des Energieträgermediums (Abgabetemperatur), dass die Leistungsquelle verlässt. Ausgehend von einer bestimmten Abgabetemperatur lehrt der Stand der Technik, mehrere Verbraucher einer Heizungsanlage in Serie miteinander zu verschalten, wobei derjenige Verbraucher mit der höchsten Temperaturanforderung an erster Stelle und dann chronologisch mit sinkender Temperaturanforderung alle weiteren Verbraucher zueinander verschaltet sind. Gegenüber der Lehre des Stands der Technik hat die Erfindung die Zielsetzung, eine möglichst hohe Leistung der Leistungsquelle an einen oder mehrere Verbraucher zu übertragen.

Das erfindungsgemäße Verfahren zur Regelung, welches in einer Anlage, insbesondere einer Heizungsanlage, ausgeführt wird, die einen Sonnenkollektor als Leistungsquelle, eine Pumpe, eine Hauptleitung und mindestens ein Ventil in einem Heizkreislauf sowie mehrere Verbraucher aufweist, wobei die Hauptleitung zumindest teilweise von einem fluiden Energieträgermedium durchflossen ist, die Leistungsquelle darauf eingerichtet ist, eine bestimmte, insbesondere die maximal verfügbare, momentane Leistung (Abgabeleistung) an das Energieträgermedium zu übertragen, und die Verbraucher jeweils einen momentanen Leistungsbedarf (Aufnahmeleistung) aufweisen, kennzeichnet sich insbesondere deshalb dadurch, dass ein Regler das mindestens eine Ventil in der Weise stellt, dass zumindest ein Teilstrom des fluiden Energieträgermediums zu demjenigen hier sogenannten "ersten Verbraucher" der mehreren Verbraucher gelenkt wird, dessen Aufnahmeleistung zu der Abgabeleistung betraglich die kleinste Differenz aufweist.

Eine Heizungsanlage kann grundsätzlich eine Vorrichtung zur Erwärmung von Stoffen, insbesondere von Objekten, Räumen und/oder Fluiden, wie beispielsweise Brauch- oder Heizungswasser, verstanden werden. Eine Wärmeleistung kann hierbei durch eine Leistungsquelle zur Verfügung gestellt werden. Eine Leistungsquelle kann vorzugsweise eine Umweltenergie- und /oder Umweltleistungsquelle sein. Die Leistungsquelle kann insbesondere hierzu einen Sonnenstrahlungskollektor, insbesondere Vakuumröhrenkollektor, Flachkollektor und/oder Parabolrinnenkollektor sein und/oder einen Pufferspeicher aufweisen. Der Sonnenstrahlungskollektor und der Pufferspeicher können vorzugsweise in Serie oder parallel miteinander verschaltet sein. Ferner kann die Leistungsquelle ein Teil eines Heizkreislaufes sein und/oder mit der Hauptleitung verkoppelt sein. Außerdem weist die Heizungsanlage eine Pumpe, eine Hauptleitung und mindestens ein Ventil auf. Einer oder mehrere der Verbraucher können Teil des Heizkreislaufes sein. Die zuvor genannten Bauteils können also in der Weise miteinander verbunden sein, dass ein fluides Energieträgermedium im Kreis fließen kann. Der Heizkreislauf kann durch ein Ventil in zwei oder mehr Pfade aufgeteilt werden. So kann vorzugsweise jeweils ein Ventil einem Verbraucher zugeordnet sein. Zwei oder mehrere Pfade eines Heizkreislaufes können durch einen Strömungssammler gesammelt und/oder zu einem Fluidstrom vereint werden.

Die Hauptleitung kann durch die Leistungsquelle, die Pumpe, die Ventile und/oder die Strömungssammler unterbrochen sein. An den Unterbrechungen können die zuvor genannten Bauteile, also die Leistungsquelle, die Pumpe, die Ventile und/oder die Strömungssammler, mit der Hauptleitung verbunden sein. Somit ist es möglich, dass ein fluides Energieträgermedium die Heizungsanlage in einem Heizkreislauf durchfließt. So kann auch die Hauptleitung zumindest teilweise von einem fluiden Energieträgermedium durchflossen sein. Insbesondere für eine Einrohrheizungsanlage kann es bevorzugt sein, dass jedem Verbraucher ein Ventil und ein Strömungssammler zugeordnet ist, wobei der Strömungssammler in der Hauptleitung hinter dem Ventil angeordnet ist. Bevorzugt kann ein Verbraucher durch eine Verbrauchervorlaufleitung mit einem Ventil und durch eine Verbraucherrücklaufleitung mit einem Strömungssammler verbunden sein. Das Ventil weist vorzugsweise drei Anschlüsse auf. Zwei der Anschlüsse können mit der Hauptleitung verbunden sein. Der dritte Anschluss ist bevorzugt mit der Verbrauchervorlaufleitung verbunden. Grundsätzlich kann das Ventil von einer beliebigen aus dem Stand der Technik bekannten Bauart sein. Bevorzugt ist das Ventil ein Schaltventil oder Mischventil. Ein Schaltventil zeichnet sich vorzugsweise dadurch aus, dass es ein Fluidstrom eines Eingangs des Ventils nur zu einem Ausgang des Ventils lenkt. Ein Mischventil zeichnet sich vorzugsweise dadurch aus, dass es einen Fluidstrom eines Eingangsanschlusses in mehrere Teilströme bzw. zu mehreren der Ausgangsanschlüsse lenkt. Durch ein Fluidsteuerelement des Mischventils können die Teilströme anteilig zueinander steuerbar und/oder zwischen den Ausgängen umschaltbar sein. Der Strömungssammler kann eine Vorrichtung mit mindestens drei Anschlüssen sein, wobei mindestens zwei Anschlüsse Eingangsanschlüsse für Fluide sind und mindestens ein Anschluss ein Ausgangsanschluss für ein Fluid ist. Der Strömungssammler kann also mehrere Fluidströme zu mindestens einem Fluidstrom vereinen. Ferner kann der Strömungssammler auch mehrere Fluidströme, insbesondere miteinander, vermischen.

Ferner ist es erfindungsgemäß, dass die Leistungsquelle eine bestimmte maximale Abgabeleistung an das Energieträgermedium übertragen kann. Dieser Zusammenhang wird im Folgenden anhand einer Leistungsquelle mit einem Sonnenstrahlkollektor beschrieben. Im Mittel kann die Leistung, welche die Sonne auf einem (extraterrestrischen) Quadratmeter der Erde überträgt, 1367 Watt/m² sein. Dieser Wert schwankt natürlich stark in Abhängigkeit der Umweitverhältnisse. Dennoch soll dieser Wert exemplarisch im Weiteren als konstant angenommen werden. Ferner soll angenommen werden, dass die Leistungsquelle bei einem optimalen Wirkungsgrad eine maximale Abgabeleistung an das Energieträgermedium übertragen kann. Das Energieträgermedium ist vorzugsweise ein flüssiges Energieträgermedium und kann vorzugsweise Wasser sein. Für das Beispiel kann der maximale Wirkungsgrad (insbesondere der maximale Gesamtwirkungsgrad) 0,5 sein. Die sichtbare und/oder unbeschattete Fläche des Kollektors (insbesondere Kollektorfläche) ist für dieses Beispiel 1 m². Die maximale Abgabeleistung beträgt für das zuvor eingeführte Beispiel somit 0,5 x 1367 W/m² x 1 m² = 683,5 W (bevorzugt gilt: maximaler Wirkungsgrad x Solarkonstante x Kollektorfläche = maximale Abgabeleistung).

Es ist ferner erfindungsgemäß, dass die Verbraucher jeweils eine Aufnahmeleistung aufweisen. Die Aufnahmeleistung eines Verbrauchers kann die Leistung sein, die an den Verbraucher übertragen und/oder von diesem aufgenommen werden kann. Die Aufnahmeleistung eines Verbrauchers kann durch Temperatur- und/oder Volumenflusssensoren an und/oder in der jeweiligen Verbrauchervor- und/oder Verbraucherrücklaufleitung des Verbrauchers gemessen werden. Ferner kann die Vor- und/oder Rücklaufleitung des Verbrauchers einen Drucksensor aufweisen. Weitere stoffspezifische Konstanten, wie eine Gaskonstante und/oder Solarkonstante, können ebenfalls durch die Heizungsanlage gespeichert sein, sodass Wärmeleistungen berechnet und/oder eine Leistungsdifferenz zwischen der Vor- und Rücklaufleitung eines Verbrauchers berechnet werden können. Für bekannte Verbraucher kann eine Aufnahmeleistung auch von außen, insbesondere an den Regler, vorgebbar sein. Insbesondere kann eine Aufnahmeleistung auch von nur wenigen messbaren Parametern, wie der Verbrauchervorlauftemperatur, Verbraucherrücklauftemperatur und dem Verbrauchervolumenstrom, funktional abhängig sein und/oder mathematisch funktional berechenbar sein.

Das erfindungsgemäße Verfahren zur Regelung ist dadurch gekennzeichnet, dass ein Regler das mindestens eine Ventil in der Weise stellt, dass zumindest ein Teilstrom des fluiden Energieträgermediums zu demjenigen hier sogenannten "ersten Verbraucher" der mehreren Verbraucher gelenkt wird, dessen Aufnahmeleistung zu der maximalen Abgabeleistung nämlich betraglich die kleinste Differenz aufweist. Mit anderen Worten kann sich die Erfindung dadurch auszeichnen, dass durch die Regelung zumindest ein Teilstrom des fluiden Energieträgermediums durch denjenigen Verbraucher fließt, der die maximale Abgabeleistung der Leistungsquelle möglichst vollständig aufnimmt, und sodass vorzugsweise zwischen der Aufnahmeleistung und der maximalen Abgabeleistung eine möglichst kleine (Leistungs-) Differenz ist. Hierbei stellt der Regler vorzugsweise das, insbesondere mindestens eine, Ventil, das dem ersten Verbraucher zugeordnet ist. Sind mehrere Ventile in Serie zueinander verschaltet, so ist der erste Verbraucher nicht notwendigerweise der in der Reihenfolge erste Verbraucher aus der Serienschaltung. Außerdem ist der "erste Verbraucher" im Sinne der Definition zu Beginn dieses Absatzes nicht notwendigerweise der Verbraucher mit der höchsten Aufnahmeleistung. Vielmehr ist es bevorzugt, dass der erste Verbraucher eben eine Aufnahmeleistung aufweist, die zu der, insbesondere maximalen, Abgabeleistung der Leistungsquelle betraglich die kleinste Differenz hat. Dies kann bevorzugt sein, wenn beispielsweise zu erwarten ist, dass die Abgabeleistung steigt. So kann der Regler beispielsweise für die Sonneneinstrahlung eine 24-Stunden-Voraussagekennlinie aufweisen. Diese Kennlinie kann die zu erwartende Sonneneinstrahlung über die Zeit tabellieren.

Bevorzugt stellt der Regler das mindestens eine Ventil in der Weise, dass zumindest ein Teilstrom des fluiden Energieträgermediums zu dem ersten Verbraucher gelenkt wird. Sofern nur ein Teilstrom des fluiden Energieträgermediums zu dem ersten Verbraucher gelenkt wird, ist es bevorzugt, dass das Ventil ein Mischventil ist. Durch das Mischventil kann ein Teilstrom zu dem Verbraucher und ein, insbesondere komplementärer, Teilstrom zu dem bevorzugten Strömungssammler des Verbrauchers und/oder in den fortführenden Teil der Hauptleitung gelenkt werden. Ferner kann es bevorzugt sein, dass das mindestens eine Ventil ein Schaltventil ist. Hierbei wird das durch die Hauptleitung in das Ventil fließenden Energieträgermedium vollständig zu dem Verbraucher oder in den fortführenden Teil der Hauptleitung oder zu dem bevorzugten Strömungssammler gelenkt.

Ferner weist die Heizungsanlage und/oder der Regler Mittel auf, um die Leistungsaufnahme eines Verbrauchers und/oder die Leistungsabgabe der Leistungsquelle zu ermitteln. Ferner kann der Regler eine Recheneinheit zur Berechnung der Differenz einer Aufnahmeleistung und der, insbesondere maximalen, Abgabeleistung aufweisen. Ferner kann der Regler eine Recheneinheit zur Bewertung der Leistungsdifferenzen aufweisen. Ferner kann zwischen dem Regler und jedem der Ventile eine Leitungsverbindung sein, sodass der Regler eine Stellgröße an das jeweilige Ventil übermitteln kann oder das Ventil durch eine Stellgröße stellt.

Für eine bevorzugte Ausgestaltung des Verfahrens ist es vorteilhaft, wenn es einen möglichst geringen Wechsel zwischen den durchflossenen Verbrauchern gibt und/oder möglichst wenige Verbraucher hinzu- bzw. weggeschaltet werden. Mit anderen Worten: Sofern die Verbraucher eine konstante Leistung nachfragen und die Leistungsquelle eine konstante Leistung bereitstelit, ist es erstrebenswert, dass möglichst durchgehend die gleichen (nicht wechselnden) Verbraucher von dem fluiden Energieträgermedium durchflossen werden. Eine vorteilhafte Ausgestaltung des Verfahrens zeichnet sich deshalb dadurch aus, dass die Aufnahmeleistung des ersten Verbrauchers kleiner als die, insbesondere maximale, Abgabeleistung der Leistungsquelle ist. Es ist ebenfalls möglich, dass die Aufnahmeleistung des ersten Verbrauchers der Abgabeleistung entspricht. Auf diese Weise kann dem Energieträgermedium keine höhere Leistung entzogen werden als es dem Energieträgermedium durch die Leistungsquelle hinzugefügt wird. Eine über das Volumen des Energieträgermediums gemittelte Temperatur dieses Energieträgermediums sinkt unter den zuvor genannten Voraussetzungen deshalb auch nicht ab. Die gemittelte Temperatur des Energieträgermediums kann allenfalls mit der Zeit steigen. Insbesondere unter Aufweichung der zuvor genannten Bedingungen kann es sinnvoll sein, dass die Aufnahmeleistung des ersten Verbrauchers, insbesondere kurzzeitig, größer als die, insbesondere maximale, Abgabeleistung ist Somit kann es erreicht werden, dass das fluide Energieträgermedium keine zu hohe gemittelte (über das Volumen) Temperatur erreicht.

Vielfach weisen Heizungsanlagen mehrere Verbraucher mit unterschiedlichen Anforderungen auf. Eine Anforderung wurde bereits eingeführt. Es war jene bezogen auf die jeweilige Aufnahmeleistung eines Verbrauchers. Eine weitere Anforderung kann an das Temperaturniveau eines jeweiligen Verbrauchers gestellt sein. Da es bevorzugt ist, dass jeder Verbraucher jeweils eine Vor- und Rücklaufleitung aufweist, eignet sich ein fluides Energieträgermedium, das diese Leitungen durchfließt, auch besonders gut, um die Temperaturanforderungen eines Verbrauchers zu beziffern. So kann das Energieniveau eines Verbrauchers beispielsweise durch die Vorlauftemperatur eines Verbrauchers, also die Temperatur des Energieträgermediums, das durch die Vorlaufleitung des Verbrauchers fließt, oder durch die Rücklauftemperatur eines Verbrauchers, also die Temperatur des fluiden Energieträgermediums, das durch den Rücklauf fließt, bestimmt sein. Das von der Leistungsquelle kommende Energieträgermedium verlässt die Leistungsquelle mit einer Abgabetemperatur. Für eine weitere Ausgestaltung kann es deshalb vorteilhaft sein, dass der Regler durch ein Stellen der Pumpe die Abgabetemperatur auf eine vorgebbare Vorlauftemperatur, insbesondere die Vorlauftemperatur des ersten Verbrauchers, regelt. Der Regler kann beispielsweise durch eine Stellgröße die Pumpe stellen. Die Stellgröße kann dazu bevorzugt die Drehzahl, die Leistung, die Fördermenge, der Druck und/oder der Rotorflügelwinkel der Pumpe öder eine zu zumindest einer der Größen im Wesentlichen proportionalen und/oder von mindestens einer der Größen im Wesentlichen funktional abhängigen Größen sein. Ferner kann die Stellgröße die Spannung, der Strom, die Frequenz, die Pulsfrequenz, die Pulsweite und/oder eine sonstige Größe eines elektrischen Motors der Pumpe oder eine zu zumindest einer der Größen im wesentlichen proportionale und/oder zumindest einer der Größen im wesentlichen funktional abhängigen Größe sein. Es ist ferner bevorzugt, dass der Regler, Insbesondere zum Stellen der Pumpe und/oder vorzugsweise zum Stellen des Ventils, einen Datenspeicher aufweist, der die Aufnahmeleistungen und/oder die Vorlaufsolltemperaturen der Verbraucher speichert. Die Verbrauchervorlaufsolltemperaturen und/oder Aufnahmeleistungen könnten dann in der Weise vorgebbar sein, dass der entsprechende Inhalt des Speichers, insbesondere von außen, veränderbar und/oder editierbar ist. Zur Ermittlung insbesondere der Abgabetemperatur kann in oder an der Hauptleitung zwischen der Leistungsquelle und dem, insbesondere ersten, Verbraucher und/oder dem Ventil des Verbrauchers ein Sensor zur Messung der Temperatur, des Volumenstroms und/oder des Drucks (Abgabesensor) angebracht sein. Die Heizungsanlage kann ferner zwischen dem Abgabesensor und dem Regler eine Signalverbindung, insbesondere Signalleitungsverbindung und/oder Funkverbindung, aufweisen.

Für eine weitere Ausgestaltung der Erfindung ist es bevorzugt, dass der Regler aus der Differenz aus der Abgabetemperatur und der vorgebbaren Verbrauchervorlaufsolltemperatur (Temperaturregelfehler) eine Pumpenstellgröße ermittelt, wobei die Pumpen-Stellgröße bevorzugt eine Stellgröße der Pumpe ist. Es ist ferner bevorzugt, dass der Regler ein proportionales, integrales und/oder differenzierendes Übertragungsverhalten von dem Pumpenregelfehler zu Pumpenstellgröße aufweist Die Reglung der Abgabetemperatur auf die vorgebbare Verbrauchervorlauftemperatur (Verbrauchervorlaufsolltemperatur) ist bevorzugt eine Regelung in einem geschlossenen Regelkreis.

In einer bevorzugten Ausgestaltung weist der Regler also zwei Regelziele auf. Das erste Ziel des Reglers ist zumindest einen Teilstrom des fluiden Energieträgermediums zu dem ersten Verbraucher zu lenken, dessen Aufnahmeleistung zu der, insbesondere maximalen, Abgabeleistung betraglich die kleinste Differenz aufweist Das zweite, bevorzugte Ziel des Reglers ist es, die Abgabetemperatur auf eine vorgebbare Vorlaufsolltemperatur, insbesondere des ersten Verbrauchers, zu regeln. Es ist nun grundsätzlich möglich, dass die zuvor genannten Regelziele sich stören und/oder miteinander kollidieren. Insbesondere sind beide Ziele möglicherweise nicht gleichzeitig umsetzbar. Sollen aber beide Regelziele gleichzeitig verfolgt werden, so können von dem Regler diejenigen Verbraucher bevorzugt nicht berücksichtigt werden, für die beide Regelziele nicht gleichzeitig erreichbar sind. Bevorzugt weist der Regler eine Recheneinheit auf, um die nicht zu berücksichtigenden Verbraucher zu ermitteln. Für eine bevorzugte Ausgestaltung kann es vorteilhaft sein, dass die, insbesondere maximale, Abgabeleistung und/oder die, insbesondere maximale, Abgabetemperatur durch, insbesondere charakteristische, Parameter der Heizungsanlage bestimmbar sind. Die Parameter können vorzugsweise Parameter der Bauteile der Heizungsanlage und/oder gemessene Werte der Sensoren sein. Der Regler kann dazu ein mathematisches Modell gespeichert haben, mit dem der Regler und/oder die Recheneinheit des Reglers die zuvor genannte Abgabeleistung und/oder Abgabetemperatur berechnet

Je nach Einsatzgebiet und Art der Verbraucher können die entsprechenden Aufnahmeleistungen und/oder Verbrauchervorlaufsolltemperaturen auch dynamische Größen sein und/oder funktional von verschiedenen Randbedingungen und/oder anderen äußeren und/oder konstruktiven Parametern abhängen. Es ist deshalb vorteilhaft, wenn das Verfahren zur Regelung, welches in einer Heizungsanlage ausgeführt wird, auch bei sich ändernden Umgebungsverhältnissen besonders wirksam ist. Das Verfahren ist insbesondere dann besonders wirksam, wenn die Regelziele des Reglers möglichst gut erreicht werden. Insbesondere in diesem Sinne ist es aber auch möglich, dass die, insbesondere maximale, Abgabeleistung aus einem Kennfeld (Leistungskennfeld), das Abgabetemperaturen, Kollektorrücklauftemperaturen, Kollektorvolumenströme, Lichtintensitäten, Umwelttemperaturen, Kollektorflächen, Kollektorerdwinkel, Kollektorazimut Ein Kennfeld (beispielsweise das Leistungskennfeld oder das in einem der folgenden Abschnitte eingeführte Temperaturkennfeld), das mehrere Größen zueinander tabelliert, impliziert, dass dazu Werte der Bezugsgrößen zueinander tabelliert sind. Eine dieser Bezugsgrößen sind die Abgabetemperaturen. Die Abgabetemperaturen aus dem Leistungskennfeld können beispielsweise durch Temperaturen von 5°C bis +200°C, vorzugsweise In 0,1°C-Schritten, repräsentiert sein. Jede Größe aus einem Kennfeld kann oder sollte durch die gleiche Anzahl der Werte repräsentiert sein. Die Werte als solche sind jedoch bevorzugt nicht begrenzt. Damit einander zugehörige Daten aus einem Kennfeld möglichst einfach einander zugeordnet sein können, ist es besonders sinnvoll, wenn jede der Größen durch die gleiche Anzahl von Werten repräsentiert ist. Sollte eine Auflösung eines Kennfeldes und/oder einer Größe nicht reichen, so kann es ebenfalls sinnvoll sein, dass Zwischenwerte der Größen eines Kennfeldes interpoliert werden und/oder weitere Werte der Größen extrapoliert werden.

Die Bezugsgrößen des Leistungskennfeldes und/oder des Temperaturkennfeldes können vorzugsweise wie folgt verstanden werden. Die Abgabetemperatur kann die Temperatur des fluiden Energieträgermediums einer Hauptleitung sein, die, bevorzugt direkt zuvor, die Leistungsquelle durchflossen hat. Unter einer Kollektorrücklauftemperatur kann die Temperatur des fluiden Energieträgermediums in der Hauptleitung verstanden werden, das ohne einen Verbraucher zu durchfließen zu der Pumpe und/oder zu der Leistungsquelle, Insbesondere einem Sonnenstrahlungskollektor, fließt. Unter einem Kollektorvolumenstrom kann der Volumenstrom des fluiden Energieträgermediums verstanden werden, der die Leistungsquelle, insbesondere durchströmt. Als eine Lichtintensität kann die Intensität des Lichtes in (un)mittelbarer Nähe des Kollektors oder des Lichtes, das auf den Kollektor trifft, sein. Die Intensität bezeichnet physikalisch die Energie pro Zeit pro Fläche. Mit anderen Worten kann die Intensität ein Begriff für die "Stärke" der Lichteinstrahlung auf den Kollektor sein. Als eine Umwelttemperatur kann die Temperatur verstanden werden, die der Stoff aufweist, von dem die Leistungsquelle, insbesondere der Kollektor, umgeben ist. Zumeist ist die Umwelttemperatur die Lufttemperatur in, insbesondere unmittelbarer. Nähe zu dem Kollektor und/oder der Leistungsquelle. Als eine Koltektorfläche kann eine sichtbare und/oder unbeschattete Fläche eines Kollektors gemeint sein. Es ist ferner bevorzugt, dass unterhalb der Kollektorfläche die Absorber des Kollektors angeordnet sind. Zur Beschreibung eines Kollektorerdwinkels und/oder eines Kollektorazimutwinkels wird im Folgenden zunächst ein lokales Koordinatensystem für den Kollektor eingeführt. Dieses Koordinatensystem ist ein orthogonales Koordinatensystem. Die erste Achse ist durch die Normale der Kollektoroberfläche bestimmt. Die zwei weiteren Achsen liegen in der Kollektorfläche. Sie sind untereinander orthogonal zueinander und jeweils orthogonal zu der Normale der Kollektorfläche. Die mit der Normalen zusammenfallende Achse des lokalen Kollektorkoordinatensystems soll als Normalenachse bezeichnet werden. Die beiden anderen Achsen sollen als Längsachse und Höhenachse des Kollektors bezeichnet sein. Zur leichteren Beschreibung wird im Folgenden zumindest davon ausgegangen, dass die Kollektorfläche zunächst parallel zu einer Tangentialebene der Erde angeordnet Ist. Wird nun der Kollektor um die Längsebene gedreht, so entsteht zwischen der Tangentialebene der Erde und der Kollektorfläche ein Winkel, der als Kollektorerdwinkel bezeichnet sein kann. Wird der Kollektor anstatt um die Längsachse um die Höhenachse gedreht, so entsteht zwischen der Kollektorfläche und der Tangentialebene der Erde ein anderer Winkel, der im Weiteren auch als Kollektorazimutwinkel bezeichnet werden kann. Grundsätzlich kann unter einem Wirkungsgrad das Verhältnis von abgegebener Leistung zu zugeführter Leistung verstanden werden. In diesem Zusammenhang kann unter einem Kollektorwirkungsgrad das Verhältnis der Abgabeleistung der Leistungsquelle zu der durch die Sonne zugeführte Leistung (Sonnenleistung) verstanden werden. Die Sonnenleistung kann vorzugsweise aus dem Produkt der Lichtintensität und der Kollektorfläche berechnet werden.

Die Ermittlung der, insbesondere maximalen, Abgabeleistung kann die folgenden zwei Schritte umfassen:
In einem ersten Schritt können die Abgabetemperatur, die Kollektorrücklauftemperatur, der Kollektorvolumenstrom, die Lichtintensität, die Umwelttemperatur, die Kollektorfläche, der Kollektorerdwinkel, der Kollektorazimutwinkel und/oder der Kollektorwirkungsgrad gemessen werden. Bereits eingeführt wurde der Abgabesensor in oder an der Hauptleitung insbesondere zur Messung der Abgabetemperatur. Ferner kann in oder an der Hauptleitung zwischen dem letzten durchflossenen Verbraucher und der Pumpe und/oder Leistungsquelle ein Sensor zur Messung der Temperatur, des Volumenstroms und/oder des Druckes (Rückführungssensor) des fluiden Energieträgermediums in der Hauptleitung vorgesehen sein. Ausgehend von der Annahme, dass der Volumenstrom durch den Kollektor im Wesentlichen dem Volumenstrom durch die Hauptleitung an dem Abgabesensor und/oder Rückführungssensor ist, kann der Kollektorvolumenstrom durch den Abgabesensor und/oder Rückführungssensor gemessen werden. Ferner kann die Heizungsanlage einen Lichtsensor aufweisen. Der Lichtsensor kann vorzugsweise auch in die Kollektorfläche integriert sein oder in unmittelbarer Nähe zu dem Kollektor bzw. zu der Leistungsquelle angeordnet sein. Der Lichtsensor kann ferner in der Weise ausgestaltel sein, dass dieser die Lichtintensität messen kann. Ferner kann der Lichtsensor in der Weise ausgestaltet sein, dass der Lichtsensor die Lichtintensität in Abhängigkeit der Wellenlänge und/oder in Abhängigkeit eines begrenzten elektromagnetischen Wellenspektrums, insbesondere das Wellenspektrum von 380 Nanometer bis 780 Nanometer, messen kann. Ferner kann die Heizungsanlage einen Sensor zur Messung der Temperatur der Umwelt (Umwelttemperatursensor) aufweisen. Der Temperatursensor kann vorzugsweise in die Leistungsquelle integriert sein. Auch ist es möglich, dass der Temperatursensor in der, insbesondere unmittelbaren, Nähe der Leistungsquelle angeordnet ist Die Umwelttemperatur kann somit durch den Umwelttemperatursensor gemessen werden. Vielfach sind Sonnenkollektoren in einzelne Module unterteilt. Dies hat insbesondere den Vorteil, dass der Ausfall eines Moduls nicht zu einer Störung und/oder zu einem Ausfall des gesamten Sonnenstrahlungskollektors führen muss. Vielmehr können einzelne, insbesondere defekte, Module von der "aktiven" Heizungsanlage entkoppelt werden. Die Heizungsanlage, der Regler und/oder die Leistungsquelle können deshalb eine Logik aufweisen, mit der festgestellt werden kann, welche und/oder wie viele Module defekt sind und/oder nicht betriebsbereit sind. Ferner kann mit der Logik ein Datenspeicher verknüpft sein, der die einzelnen Flächengrößen der jeweiligen Module speichert. Durch die Logik und den Datenspeicher kann somit die Kollektorfläche berechnet bzw. gemessen werden.

Danach kann in einem zweiten Schritt die, insbesondere maximale Abgabeleistung ermittelt werden, wobei die Abgabetemperatur, die Kollektorrücklauftemperatur, der Kollektorvolumenstrom, die Lichtintensität, die Umwelttemperatur, die Kollektorfläche, der Kollektorerdwinkel, der Kollektorazimutwinkel und/oder der Kollektorwirkungsgrad jeweils durch ihren gemessenen und/oder insbesondere von außen, vorgebbaren Wert festgelegt sind. Mit anderen Worten können die Werte der zuvor genannten Größen durch ihre gemessenen Werte oder durch ihre berechnete Werte und/oder durch vorgegebene Werte festgelegt sein. Insbesondere die vorgebbaren Werte können durch eine Datenschnittstelle an die Heizungsanlage und/oder den Regler übertragen werden.

Neben der zuvor erläuterten Möglichkeit zur Ermittlung der, insbesondere maximalen, Abgabeleistung, kann die Abgabeleistung auch von außen vorgebbar sein. Die Abgabeleistung und/oder maximale Abgabeleistung kann beispielsweise durch eine Eingangsdatenschnittstelle dem Regler und/oder der Heizungsanlage übermittelt werden. Die, insbesondere maximale, Abgabeleistung kann der Regler für das Stellen des mindestens einen Ventils und/oder für das Stellen der Pumpe berücksichtigen.

Eine bevorzugte Ausgestaltung des Verfahrens zeichnet sich dadurch aus, dass der Regler für das Stellen des Ventils nur diejenigen Verbraucher berücksichtigt, dessen Aufnahmeleistung kleiner als die, insbesondere maximale, Abgabeleistung ist.

Eine weitere bevorzugte Ausgestaltung der Erfindung zeichnet sich dadurch aus, dass die, insbesondere maximale, Abgabetemperatur aus einem Kennfeld. (Temperaturkennfeld), das Abgabetemperaturen, Kollektorrücklauftemperaturen, Kollektorvolumenströme, Lichlintensitäten, Umwelttemperaturen, Kollektorflächen, Kollektorerdwinkel, Kollektorazimutwinkel und/oder Kollektorwirkungsgrade zueinander tabelliert, ermittelt wird. Die Ermittlung der maximalen Abgabetemperatur kann sich vorzugsweise durch die folgenden zwei Schritte auszeichnen:
Der erste Schritt kann ein Messen der Kollektorrücklauftemperatur, des Kollektorvolumenstroms, der Lichtintensität, der Umwelttemperatur, der Kollektorfläche, des Kollektorerdwinkels, des Kollektorazimutwinkels und/oder des Kollektorwirkungsgrades sein. Die für die Messung bevorzugten Vorrichtungen wurden bereits zur Ermittlung der Abgabeleistung eingeführt. Sie können auch hier Anwendung finden.

Ein zweiter Schritt kann das Ermitteln der maximalen Abgabetemperatur sein, wobei die Kollektorrücklauftemperatur, der Kollektorvolumenstrom, die Lichtintensität, die Umwelttemperatur, die Kollektorfläche, der Kollektorerdwinkel, der Kollektorazimutwinkel und/oder der Kollektorwirkungsgrad durch ihre gemessenen und/oder insbesondere von außen, vorgebbaren Wert festgelegt sind. Insbesondere die vorgebbaren Werte können durch eine Datenschnittstelle an die Heizungsanlage und/oder den Regler übertragen werden.

Für eine bevorzugte Ausgestaltung des Verfahrens kann die, insbesondere auf die zuvor genannte Weise ermittelte, insbesondere maximale, Abgabetemperatur dazu verwendet werden, dass der Regler die Abgabetemperatur nur auf eine Vorlaufsolltemperatur regelt, die kleiner als eine maximale oder gleich der maximalen Abgabetemperatur ist. In diesem Zusammenhang ist es aber auch möglich, dass die, insbesondere maximale, Abgabetemperatur von außen dem Regler vorgebbar ist. Dies kann beispielsweise durch eine Datenschnittstelle erfolgen. Dadurch, dass der Regler die Abgabetemperatur vorzugsweise unterhalb der maximalen Abgabetemperatur hält, kann es gewährleistet werden, dass das fluide Energieträgermedium im Mittel nicht stetig absinkt. Unerreichbare Temperatursollwerte können auf diese Weise von dem Regler ferngehalten werden. Dazu kann der Regler in der Weise ausgestaltet sein, dass der Regler oder Verbraucher mit einer Verbrauchervorlaufsolltemperatur, die die, insbesondere maximale, Abgabetemperatur übersteigt, für die Regelung nicht berücksichtigt.

Es ist bevorzugt, dass das Verfahren besonders wirksam eingesetzt werden kann, wenn die Heizungsanlage mehrere Verbraucher mit verschiedenen Leistungsund/oder Temperaturanforderungen aufweist. In diesem Zusammenhang ist es besonders vorteilhaft, wenn das fluide Energieträgermedium gesteuert durch den Regler zu den Verbraucher gelenkt werden kann und/oder an den Verbraucher vorbeigelenkt werden kann und/oder in mindestens zwei Teilströme aufgeteilt werden kann, wobei vorzugsweise ein Teilstrom durch einen Verbraucher und vorzugsweise ein Teilstrom an dem Verbraucher vorbeigelenkt werden kann.

Eine bevorzugte Ausgestaltung des Verfahrens zeichnet sich dadurch aus, dass zumindest ein Teil der Verbrauchervorlaufleitungen, vorzugsweise jeweils, durch eines der Ventile und/oder zumindest ein Teil der Verbraucherrücklaufleitungen, vorzugsweise jeweils, durch einen Strömungssammler mit der Hauptleitung verbunden sind, sodass wenigstens ein Teilstrom der Hauptleitung an mindestens eine der Verbrauchervorlaufleitungen abzweigbar und/oder durch mindestens einen der Verbraucherrücklaufleitungen rückführbar ist.

Es ist besonders bevorzugt, dass jedem Verbraucher ein Ventil und ein Strömungssammler zugeordnet ist. Ein Ventil und/oder ein Strömungssammler können in oder an der Hauptleitung angebracht sein. Bevorzugt kann ein Ventil in der Weise mit der Hauptleitung verbunden sein, dass die Hauptleitung von dem Ventil unterbrochen ist und jede der beiden Unterbrechungsstellen mit jeweils einem Anschluss des Ventils verbunden sind. Das Ventil kann ferner in der Weise ausgestaltet sein, dass ein fluides Energieträgermedium von dem einen Anschluss der Hauptleitung zu dem anderen Anschluss der Hauptleitung fließen kann. Das Ventil kann ferner einen dritten Anschluss aufweisen. Der dritte Anschlusse eines Ventils kann mit einer Verbrauchervorlaufleitung verbunden sein. Die Verbrauchervorlaufleitung kann mit einem Verbraucher verbunden sein. Der Verbraucher kann mit einer Verbraucherrücklaufleitung verbunden sein. Fluides Energieträgermedium kann somit von der Verbrauchervorlaufleitung durch den Verbraucher zu der Verbraucherrücklaufleitung fließen. Die Verbraucherrücklaufleitung kann außerdem mit einem Strömungssammler verbunden sein. Der Strömungssammler ist bevorzugt in der Hauptleitung hinter dem Ventil angeordnet. Analog zu dem Ventil kann der Strömungsaufteiler auch die Hauptleitung unterbrechen. Jede dieser Unterbrechungsstellen der Hauptleitung können jeweils mit einem separaten Anschluss des Strömungsaufteilers verbunden sein.

Der Strömungsaufteiler kann in der Weise ausgestaltet sein, dass ein fluides Energieträgermedium von einem Anschluss, der mit der Hauptleitung verbunden ist, zu einem anderen Anschluss, der mit der anderen Unterbrechungsstelle der Hauptleitung verbunden ist, fließen kann. Ferner kann auch fluides Energieträgermedium aus der Verbraucherrücklaufleitung in den Strömungssammler fließen. Somit können mindestens zwei Teilströme, nämlich die aus der Hauptleitung und der Verbraucherrücklaufleitung, in einen Strörmungssammler fließen. Der Strömungsverteiler kann also zufließende Ströme von fluidem Energieträgermedium zu zumindest einem gemeinsamen Fluidstrom vereinen. Im Weiteren wird die zuvor eingeführte Verschaltung eines Ventils mit der Hauptleitung und einer entsprechenden Verbrauchervorlaufleitung, des Strömungsaufteilers mit der Hauptleitung und einer entsprechenden Verbraucherrücklaufleitung sowie des Verbrauchers mit einer entsprechenden Verbrauchervorlaufleitung und einer entsprechenden Verbraucherrücklaufleitung als Verbrauchermodul bezeichnet. Für eine bevorzugte Ausgestaltung können mehrere Verbrauchermodule in Serie miteinander verbunden sein. Die Verbindung der einzelnen Verbrauchermodule kann jeweils durch die Hauptleitung erfolgen. Grundsätzlich ist es aber auch möglich, dass mehrere Verbrauchermodule parallel zueinander verschaltet sind. Hierbei können mehrere Ventile durch die Hauptleitung miteinander verbunden sein und/oder mehrere Strömungsaufteiler durch die Hauptleitung miteinander verbunden sein.

Es kann ferner bevorzugt sein, dass zumindest ein Teil der Ventile jeweils durch eine Signalverbindung mit dem Regler verbunden sind. Diese Signalverbindungen können bevorzugt Signalleitungsverbindungen sein. Durch eine Signalverbindung zwischen dem Regler und einem Ventil kann der Regler das Ventil stellen, insbesondere indem ein Stellsignal von dem Regler an das Ventil übermittelt wird. Entsprechende Stellgrößen wurden bereits zuvor eingeführt. Die Ventile können, vorzugsweise jeweils separat, durch den Regler gestellt werden. Die Ventile selbst können Schalt- oder Mischventile sein. Sofern die Ventile Mischventile sind, können Teilströme zu verschiedenen Ausgangsanschlüssen geleitet werden.

Eine weitere bevorzugte Ausgestaltung des Verfahrens zeichnet sich dadurch aus, dass das Energieträgermedium einen hier sogenannten Vorverbraucher der Verbraucher und/oder einen dem Vorverbraucher zugeordneten Strömungssammler mit einer Verbraucherabgabeleistung und/oder mit einem Verbraucherabgabetemperatur verlässt. Bevorzugt verlässt das fluide Energieträgermedium einen Verbraucher durch eine dem Verbraucher zugeordnete Verbraucherrücklaufleitung. Die entsprechende Verbraucherrücklaufleitung ist bevorzugt mit einem entsprechenden Strömungssammler verbunden. Eine bevorzugte Ausgestaltung des Verfahrens zeichnet sich dadurch aus, dass der Regler ein Ventil eines der nachfolgenden Verbraucher, dessen Aufnahmeleistung zu der Verbraucherabgabeleistung des Vorverbrauchers betraglich die kleinste Differenz aufweist, (Nachverbraucher) in der Weise stellt, dass zumindest ein Teilstrom des fluiden Energieträgermediums des Vorverbrauchers, insbesondere ohne zuvor durch einen anderen Verbraucher zu fließen, zu dem Nachverbraucher gelenkt wird. Unter dem Energieträgermediumstrom des Vorverbrauchers kann der Volumenstrom des Energieträgermediums durch den Vorverbraucher verstanden werden. Die Verbraucherabgabeleistung eines Vorverbrauchers kann die Abgabeleistung der Leistungsquelle abzüglich der Aufnahmeleistung der, insbesondere zuvor, durchströmten Verbraucher sein.

Die Begriffe "erster Verbraucher", "Vorverbraucher" und "Nachverbraucher" sind "relative" Bezeichnungen für jeweils einen Verbraucher der Heizungsanlage.

So bestimmen die zuvor eingeführten Bedingungen, nämlich jeweils die betraglich kleinste Differenz der entsprechenden Leistungen, welcher Verbraucher der "erste Verbraucher", ein "Nachverbraucher" und/oder "Vorverbraucher" ist. Sind beispielsweise vier Verbraucher in Serie miteinander verschaltet, so kann der erste in der Reihenfolge der Verbraucher auch der "erste Verbraucher" sein. Gleichzeitig kann dieser Verbraucher auch ein Vorverbraucher für den zweiten in der Reihenfolge der Verbraucher sein, der sodann ein Nachverbraucher ist. Nachverbraucher und Vorverbraucher können also relativ zueinander bestimmt sein. Deshalb ist es auch, insbesondere gleichzeitig, möglich, dass der zweite in der Reihenfolge der Verbraucher ein Vorverbraucher für den dritten in der Reihenfolge der Verbraucher ist, der sodann ein

Nachverbraucher (relativ für den zweiten Verbraucher in der Reihenfolge der Verbraucher) kann.

Jeder Nachverbraucher hat also bevorzugt genau einen Vorverbraucher. Vor- und Nachverbraucher können also eine Verbrauchergruppe bilden. Für eine Heizungsanlage mit mehreren Verbrauchern können also auch mehrere Verbrauchergruppen bestimmt werden (insbesondere sofern die eingeführten Bedingungen (siehe oben) vorliegen). Ein Verbraucher kann Nachverbraucher einer Verbrauchergruppe sein und Vorverbraucher einer anderen Gruppe sein.

Der zuvor erläuterte Zusammenhang wird im Folgenden anhand eines leistungsbezogenen Beispiels erläutert. Für das Beispiel weist die Heizungsanlage eine Leistungsquelle mit einer Abgabeleistung von 14.000 Watt, einen Verbraucher a mit einer Aufnahmeleistung von 500 Watt, einen Verbraucher b mit einer Aufnahmeleistung von 10.000 Watt, einen Verbraucher c mit einer Aufnahmeleistung von 1.000 Watt und einen Verbraucher d mit einer Aufnahmeleislung von 4.000 Watt auf. Die Verbraucher sind jeweils in Verbrauchermodulen angeordnet, die in Serie und in der Reihenfolge a, b, c, d miteinander verbunden sind.

Die Aufnahmeleistung des Verbrauchers b (10.000 Watt) weist betraglich die kleinste Differenz (4.000 Watt) zu der Abgabeleistung (14.000 Watt) auf. Der Verbraucher b ist hier also der "erste Verbraucher". Bevorzugt fließt das von der Leistungsquelle kommende fluide Energieträgermedium zuerst zu dem "ernsten" Verbraucher. Der Regler stellt somit das Ventil des Verbrauchers b in der Weise, dass zumindest ein Teilstrom des fluiden Energieträgermediums der Leistungsquelle direkt zu dem Verbraucher b gelenkt wird. Für das hier vorliegende Beispiel fließt das Energieträgermedium deshalb zunächst von der Leistungsquelle direkt zu dem Verbraucher b. Den Verbraucher b und/oder den dem Verbraucher b Strömungssammler verlässt das Energieträgermedium mit einer Leistung von 4.000 Watt. Die Verbraucherabgabeleistung beträgt also 4.000 Watt.

Die Aufnahmeleistung des Verbrauchers d (4.000 Watt) weist betraglich die kleinste Differenz (0 Watt) zu der Verbraucherabgabeleistung (4.000 Watt) auf. Der Verbraucher d ist somit Nachverbraucher des Vorverbrauchers b. Der Regler stellt somit das Ventil des Verbrauchers d in der Weise, dass zumindest ein Teilstrom des fluiden Energieträgermediums des Vorverbrauchers (Verbraucher b) direkt zu dem Nachverbraucher (Verbraucher d) gelenkt wird. Das fluide Energieträgermedium durchfließt hierbei nicht den Verbraucher c. Es ist also bevorzugt, dass das fluide Energieträgermedium nur diejenigen Verbraucher durchfließt, der "erster Verbraucher", "Vorverbraucher" und/oder "Nachverbraucher" ist. Der Verbraucher c kann hier nicht der Nachverbraucher sein. Denn die Aufnahmeleistung des Verbrauchers c (1.000 Watt) weist betraglich eine Differenz von 3000 Watt zu der Verbraucherabgabeleistung (4.000 Watt) auf, die somit betraglich größer ist als die des Verbrauchers d. Der Verbraucher a kommt für die Auswahl als Nachverbraucher nicht in Betrachl, da der Verbraucher a dem Verbraucher b vorgeschaltet ist. Wären die Verbraucher stemförmig, parallel oder in einer anderen vorteilhaften Weise zueinander Verschaltet, könnte der Verbraucher a mit zu der Menge der auswählbaren Verbraucher gehören.

Im Weiteren verlässt das fluide Energieträgermedium den dem Verbraucher d zugeordneten Strömungssammler und fließt sodann zurück zur Leistungsquelle.

Eine weitere bevorzugte Ausgestaltung des Verfahrens zeichnet sich dadurch aus, dass die Aufnahmeleistung eines Nachverbrauchers kleiner als die oder gleich der Verbraucherabgabeleistung eines, insbesondere direkten, Vorverbrauchers ist. Ferner kann es bevorzugt sein, dass die, insbesondere vorgebbare, Vorlauftemperatur eines Nachverbrauchers kleiner als die oder gleich der Verbraucherabgabetemperatur eines, insbesondere direkten, Vorverbrauchers ist.

Insbesondere für Einrohrheizanlagen können nicht beliebige Verbraucher hintereinander in Serie geschaltet sein. Hat z. B. ein Verbraucher eine besonders hohe Aufnahmeleistung und verlässt das Energieträgermedium den Verbraucher und/oder den dem Verbraucher zugehörigen Strömungsaufteiler mit einer Verbraucherabgabeleistung die unterhalb der Aufnahmeleistung des direkt nachfolgenden Verbrauchers liegt, so ist es nicht sinnvoll, das fluide Energieträgermedium zu dem direkt nachfolgenden Verbraucher zu lenken. Eine bevorzugte Ausgestaltung des Verfahrens zeichnet sich deshalb dadurch aus, dass der Regler für das Stellen des Ventils eines Nachverbraucher nur diejenigen möglichen Verbraucher berücksichtigt, deren jeweilige Aufnahmeleistung kleiner als die oder gleich der Verbraucherabgabeleistung eines Vorverbrauchers ist und/oder deren jeweilige Verbrauchervorlaufsolltemperatur kleiner als die oder gleich der Verbraucherabgabetemperatur ist. Somit kann gewährleistet sein, dass die Aufnahmeleistung eines Nachverbrauchers kleiner als die oder gleich der Verbraucherabgabeleistung eines Vorverbrauchers ist und/oder dass die Verbrauchervorlaufsolltemperatur eines Nachverbrauchers kleiner als die oder gleich der Verbraucherabgabetemperatur eines Vorverbrauchers ist.

Ferner kann eine Signalverbindung zur Übertragung der Abgabeleistung zwischen der Leistungsquelle und dem Regler vorgesehen sein und/oder Signalverbindungen zur Übertragung der Aufnahmeleistungen und/oder der Verbrauchervorlauf(soll)temperaturen zwischen den Verbrauchern und dem Regler vorgesehen sein. Eine weitere Ausgestaltung des Verfahrens zeichnet sich dadurch aus, dass mindestens einer der Verbraucher jeweils einen Sensor in oder an der Vorlaufleitung und/oder in oder an der Rücklaufleitung aufweist, wobei jeder der Sensoren zur Messung der Temperatur, des Volumenstroms und/oder des Drucks ausgestaltet ist.

Eine bevorzugte Ausgestaltung des erfindungsgemäßen Verfahrens sieht vor, dass das fluide Energieträgermedium nur denjenigen Verbraucher durchfließt, der "erster Verbraucher", "Vorverbraucher" und/oder "Nachverbraucher" ist.

**Bezugszeichenliste:**

| **Bezugszeichen** | **Bedeutung** |
|---|---|
| 2 | Heizungsanlage |
| 4 | Leistungsquelle, Sonnenstrahlungskollektor |
| 6 | Pumpe |
| 8 | Hauptleitung |
| 10 | Ventil |
| 12 | Strömungssammler |
| 14 | Verbraucher |
| 16 | Verbrauchervorlaufleitung |
| 18 | Verbrauchervorlaufleitung |
| 20 | Regler |
| 22 | Umwelttemperatursensor |
| 24 | Lichtsensor |
| 26 | Abgabesensor |
| 28 | Rückfühnmgssensor |
| 30 | Verbraucherabgabesensor ?? |
| 32 | Signalverbindung |
| 34 | Signalverbindung |
| 36 | Signalverbindung |
| 38 | Signalverbindung |
| 40 | Signalverbindung |
| 42 | Signalverbindung |
| 44 | Signalverbindung |
| 46 | Signalverbindung |
| 48 | Sonne |
| 50 | Multiplexer |
| 52 | Verbrauchermodul |

### Ausführungsbeispiele:

Weitere Einzelheiten, Vorteile und Merkmale der Erfindung gehen aus der nachfolgenden Beschreibung der Figuren hervor. Dabei zeigen:
- **Figur 1**: eine schematische Darstellung einer Helzungsanlage mit einer Leistungsquelle, einer Pumpe, einer Hauptleitung und mehreren Verbrauchern,
- **Figur 2**: den ersten Teil eines bevorzugten Ablaufplanes des Verfahrens zur Regelung,
- **Figur 3**: den zweiten Teil des bevorzugten Ablaufplanes des Verfahrens zur Regelung,
- **Figur 4**: den dritten Teil des bevorzugten Ablaufplanes des Verfahrens zur Regelung,
- **Figur 5**: den vierten Teil des bevorzugten Ablaufplanes des Verfahrens zur Regelung und
- **Figur 6**: den fünften Teil des bevorzugten Ablaufplanes des Verfahrens zur Regelung.

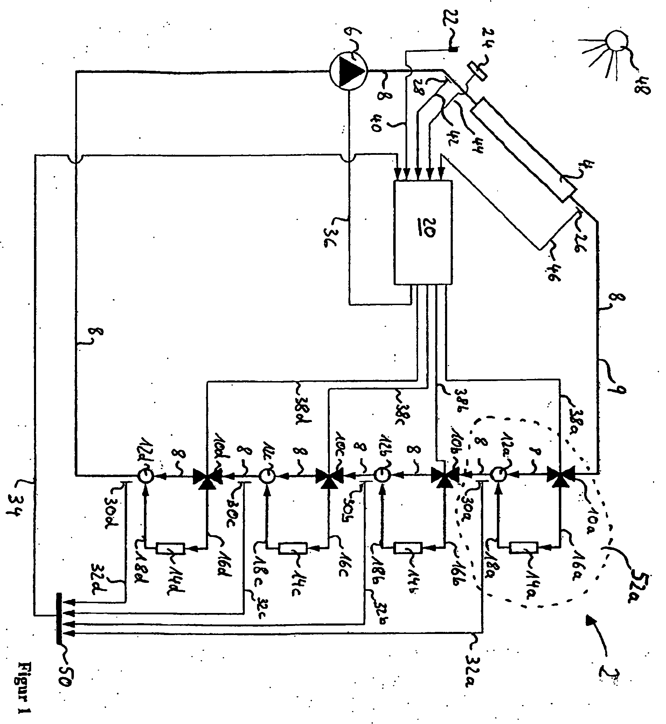

In Figur 1 ist eine Heizungsanlage **2** mit einer Leistungsquelle, **4,** einer Pumpe **6,** einer Hauptleitung **8,** vier Ventilen **10a, 10b, 10c** und **10d** in einem Heizkreislauf **9** dargestellt Die Hauptleitung **8** ist, wie in Figur 1 dargestellt, keine durchgehende Leitung. Die Hauptleitung wird vielfach durch Bauteile unterbrochen. Diese Bauteile sind beispielsweise die Leistungsquelle **4,** die Pumpe **6,** die Verbraucher **10a, 10b, 10c** und **10d** sowie die Strömungssammler **12a, 12b, 12c** und **12d.** Jedes dieser Bauteile ist jeweils mit der Hauptleitung **8** in der Weise verbunden, dass jeweils eine Unterbrechungsstelle der Hauptleitung mit einem Anschluss des Bauteils verbunden ist und dass die jeweils andere, zugehörige Unterbrechungsstelle mit einem anderen Anschluss des Bauteils verbunden ist. Ferner können alle Bauteile in der Weise ausgestaltet sein, dass ein fluides Energieträgermedium durch sie hindurchfließen kann. Somit ist es möglich, dass das fluide Energieträgermedium durch die zuvor genannten Bauteile und durch die Hauptleitung in einem Heizkreislauf **9** fließen kann. Implizit wurde bereits für die Ventile **10a, 10b, 10c** und **10d** sowie für die Strömungssammler **12a, 12b, 12c** und **12d** eine Nomenklatur eingeführt, die im Folgenden explizit erläutert wird. Mehrere der Bezugzeichen der Figur 1 umfassen eine Zahl gefolgt von einem Buchstaben. Die Zahl des Bezugszeichens bestimmt hierbei die wesentliche Bedeutung, wohingegen der nachfolgende Buchstabe die Zuordnung zu dem Verbraucher 14a, sodann immer gefolgt von dem Buchstaben a, zu dem Verbraucher 14 b, sodann immer gefolgt von dem Buchstaben b, zu dem Verbraucher 14c, sodann immer gefolgt von dem Buchstaben c, zu dem Verbraucher 14d, sodann immer gefolgt von dem Buchstaben d, bestimmt. Werden mehrere gleichartige Bauteile angesprochen, so wird der Buchstabe weggelassen.

Im thermodynamischen Sinne kann eine Energie nicht "erzeugt" werden. Deshalb zeigt Figur 1 eine Sonne 48, deren Licht auf einen Sonnenstrahlungskollektor 4 fällt. Die Sonne 48 überträgt also durch das Licht eine Leistung an den Sonnenstrahlungskollektor 4. Der Sonnenstrahlungskollektor 4 überträgt diese Energie der Sonne mit einem Kollektorwirkungsgrad an das fluide Energieträgermedium. Das fluide Energleträger medium durchfließt dabei den Sonnenstrahlungskollektor **4** und transportiert diese Leistung durch die anschließende Hauptleitung **8** zu dem Ventil **10a.** Das Ventil **10a** ist ein erstes Bauteil des Verbrauchermoduls **52a.** Neben dem Ventil **10a** weist das Verbrauchermodul **52a** die Verbrauchervorlaufleitung **16a,** den Verbraucher **14a,** die Verbraucherrücklaufleitung **18a** und den Strömungssammler **12a** sowie bevorzugt einen Teil der Hauptleitung **8** auf. Ein Verbrauchermodul kennzeichnet also eine Gruppe von Bauteilen, die in Serie, parallel oder in anderer Weise, insbesondere jeweils mehrfach hintereinander, geschaltet sind. Das Verbrauchermodul **52b** (nicht gekennzeichnet) weist das Ventil **10b**, die Verbrauchervorlaufleitung **16b,** den Verbraucher **14b,** die Verbraucherrücklaufleitung **18b** und den Strömungssammler **12b** sowie bevorzugt einen Teil der Hauptleitung **8** auf. Analoge Verbrauchermodule mit dem Endbuchstaben c und d sind ebenfalls vorgesehen (und ebenfalls aus Übersichtsgründen nicht gekennzeichnet).

Die Ventile **10** sind jeweils durch Signalverbindungen **38** mit dem **Regler 20** verbunden. Ferner ist der Regler durch eine Signalverbindung **46** mit dem Abgabesensor **26** verbunden. Der Abgabesensor misst die Temperatur des fluiden Energieträgermediums in der Hauptleitung zwischen dem Sonnenstrahlungskollektor **4** und dem Ventil **10a.** Außerdem ist ein Lichtsensor **24** durch eine Signalverbindung **44** mit dem Regler verbunden. Ferner ist ein Umwelttemperatursensor **22** durch eine Signalverbindung mit dem Regler **20** verbunden. Darüber hinaus ist der Rückführungssensor **28** durch eine Signalverbindung **42** mit dem Regler **20** verbunden. Ferner weist der Regler **20** einen Speicher auf, der für jeden Verbraucher **14** die jeweilige Aufnahmeleistung und Verbrauchervortaufsolltemperatur speichert. Aus der gemessenen Abgabetemperatur, der gemessenen Kollektorrücklauftemperatur, des gemessenen Kollektorvolumenstroms, der gemessenen Lichtintensität und der gemessenen Umwelttemperatur ermittelt der Regler **20** die aktuelle, insbesondere maximale, Abgabeleistung des Sonnenstrahlungskollektors. Diese ist beispielsweise 12.000 Watt bei einer maximalen Abgabetemperatur von 40°C, 10.000 Watt bei einer maximalen Abgabetemperatur von 45°C und 8.000 Watt bei einer maximalen Abgabetemperatur von 60°C. In dem Speicher des Reglers **20** sind ferner folgende Daten gespeichert: Für den Verbraucher **14a** ist die Aufnahmeleistung 500 Watt und die Verbrauchervorlaufsolltemperatur 30°C, für den Verbraucher **14b** ist die Aufnahmeleistung 10.000 Watt und die Verbrauchervorlaufsolltemperatur 40°C, für den Verbraucher **14c** ist die Aufnahmeleistung 1.000 Watt und die Verbrauchervorlaufsolltemperatur 30°C und für den Verbraucher **14d** ist die Aufnahmeleistung 500 Watt und die Verbrauchervorlaufsolltemperatur 25°C.

Ferner weist die Heizungsanlage **2** mehrere Verbraucherabgabesensoren **30** zur Messung der Verbraucherabgabeleistung und/oder zur Messung der Verbraucherabgabetemperatur auf. Es ist jeweils ein Verbraucherabgabesensor **30** in oder an dem Teil der Hauptleitung **8** angebracht, die direkt auf einen dem jeweiligen Verbraucher zugeordneten Strömungssammler **12** folgt. Die Verbraucherabgabesensoren **30** sind jeweils durch eine Signalverbindung **32** mit einem Multiplexer **50** verbunden. Der Multiplexer **50** ist durch eine Signalverbindung **34** mit dem Regler **20** verbunden. Durch den Multiplexer werden die Signale der Verbraucherabgabesensoren in einem Multiplexverfahren durch die Signalverbindung **34** an den Regler **20** übermittelt. Somit können mehrere Signalverbindungen eingespart werden. Zum Stellen der Pumpe **6** ist der Regler **20** durch eine Signalverbindung **36** mit der Pumpe **6** verbunden.

Grundsätzlich kann der Regler **20** eines der Ventile **10 in** der Weise stellen, dass der Fluidstrom aus der Hauptleitung **8** an die angeschlossene Vorlaufleitung **16** gelenkt wird. Das Ventil **10** kann aber auch in der Weise gestellt werden, dass der Fluidstrom an die im Weiteren angeschlossene Hauptleitung **8** gelenkt wird. Ist das Ventil **10** ein Mischventil, so kann der Regler das Ventil **10** in der Weise stellen, dass der durch die Hauptleitung **8** ankommende Fluidstrom in zwei Teilströme aufgeteilt wird. Diese Teilströme können in die entsprechende Vorlaufleitung und in die weiterführende, entsprechende Hauptleitung gelenkt werden. Der Strömungssammler **12** ist grundsätzlich das Gegenstück zu dem Ventil **10.** Fluidströme aus einer entsprechenden Hauptleitung und/oder aus einer entsprechenden Verbraucherrücklaufleitung **18** können In dem Strömungssammler gesammelt, vermischt und/oder zu einem Fluidstrom an die fortführende Hauptleitung **8** gelenkt werden. Somit ist es beispielsweise möglich, dass der Regler das Ventil **10a** in der Weise stellt, dass der Fluidstrom durch das Ventil von der Hauptleitung **8a** kommend an den weiterführenden Teil der Hauptleitung 8 (vollständig) gelenkt wird. Der Strömungssammler **12a** lässt den Fluidstrom ebenfalls in analoger Weise passieren, sodass der Fluidstrom ohne den Verbraucher **14a** zu durchfließen auf das Ventil **12b** trifft. Ist das Ventil **12b** durch den Regler **20** in der Weise gestellt, dass der Fluidstrom ausschließlich zu der Verbrauchervorlaufleitung **16b** gelenkt ist, so durchfließt der Fluidstrom folglich auch vollständig den Verbraucher **14b** und trifft nach dem Durchfließen der Verbraucherrücklaufleitung **18a** auf den Strömungssammler **12b.** Durch den Teil der Hauptleitung **8a** zwischen dem Ventil **10b** und **12b** fließt sodann kein Volumenstrom in den Strömungssammler **12b** ein. Von dem Strömungssammler **12b** fließt das fluide Energieträgermedium durch einen weiteren Teil der Hauptleitung 8 zu dem Ventil **10c.** Für die Ventile **10c** und **10d** sind analoge Stellungen der Ventile denkbar. Der Fluss des fluiden Energieträgermediums würde dann analog strömen.

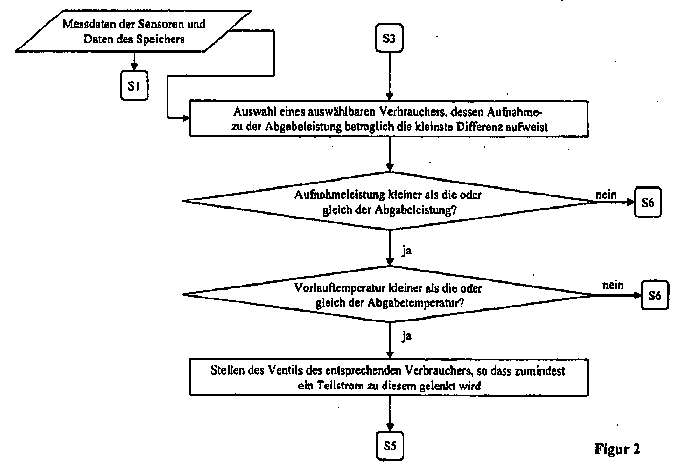

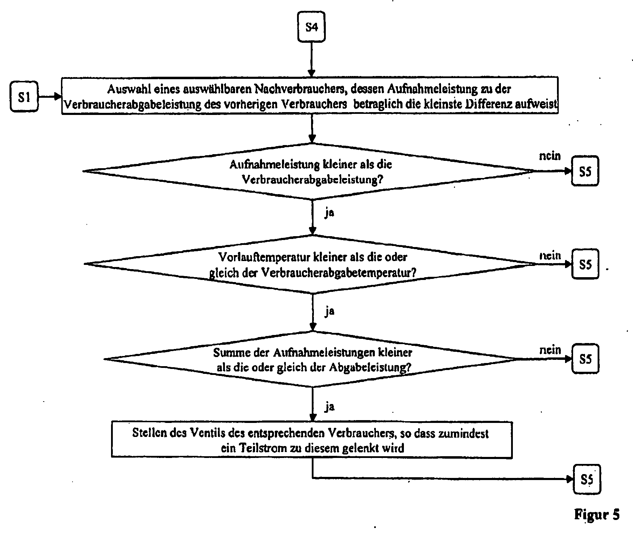

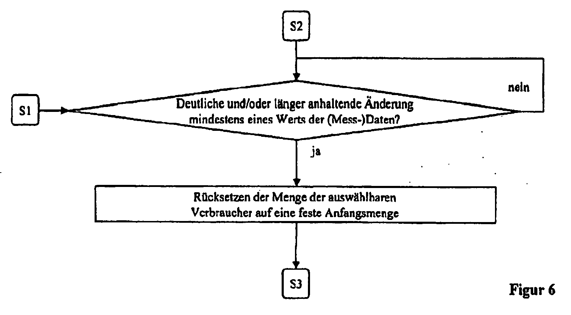

In den Figuren 2 bis 6 sind insgesamt fünf Teile eines zusammengehörenden, bevorzugten Ablaufplanes eines Verfahrens zur Regelung dargestellt. Die Größen, auf die der Ablaufplan Bezug nimmt, sollen sich auf jene beziehen, die bereits beispielhaft in der Figur 1 eingeführt worden sind. Sofern sie dort nicht eingeführt worden sind, beziehen sich die Größen auf die vorherige Beschreibung. Zur Darstellung des Ablaufplanes wurden vier verschiedene Elemente verwendet. Eine bedingte Verzweigung ist durch eine Raute dargestellt. Eine Operation ist durch ein Rechteck dargestellt. Eine Schnittstelle ist durch ein Oval dargestellt Und eine Datenein- oder Datenausgabe ist durch ein Parallelogramm dargestellt. Die Schnittstellenelemente weisen jeweils den Großbuchstaben S gefolgt von einer Zahl auf. Figurenübergreifen sollen diejenigen Schnittstellen mit der gleichen Nummer, insbesondere sternförmig, miteinander verbunden sein. So ist beispielsweise die Schnittstelle S1 aus Figur 2 mit der Schnittstellt S1 aus. Figur 5 und der Schnittstelle S1 aus Figur 6 verbunden. Die Linien und Pfeile bezeichnen immer eine Verbindung und die Richtung zum nächstfolgenden Element. Hierbei bildet die Pfeillinie, die von der Datenein- und Datenausgabe wegführt eine Ausnahme. Die Daten der Datenausgabe aus Figur 2, nämlich die Messdaten der Sensoren und die Daten des Speichers (insbesondere des Reglers), sind vorzugsweise von der verknüpften Operationen aus Figur 5 und von der verknüpften Verzweigung aus Figur 6 lesbar.

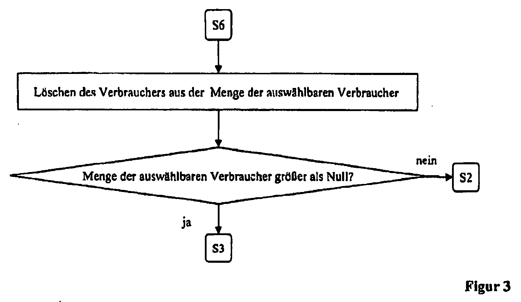

Der Ablaufplan wird im Folgenden abstrakt erläutert. Ausgangspunkt der Erläuterung ist die oberste Operation aus der Figur 2. Sie lautet: Auswahl eines auswählbaren Verbrauchers, dessen Aufnahme zu der Abgabeleistung betraglich die kleinste Differenz aufweist". Dem Regler sind also eine Menge von auswählbaren Verbrauchern bekannt Aus dieser Menge wählt der Regler denjenigen Verbraucher aus, dessen Aufnahmeleistung zu der Abgabeleistung der Leistungsquelle betraglich die kleinste Differenz bildet. Daraufhin prüft der Regler die Bedingung der nachfolgenden Verzweigung. Die Bedingung lautet "Aufnahmeleistung kleiner als die oder gleich der Abgabeleistung?" Der Regler überprüft also, ob die Aufnahmeleistung des ausgewählten Verbrauchers kleiner als die oder gleich der Abgabeleistung der Leistungsquelle ist. Trifft die Bedingung zu ("ja") folgt der Regler der Verbindung vertikal nach unten zu der nächsten Verzweigung. Trifft die Bedingung nicht zu ("nein"), so folgt der Regler durch die Schnittstelle 6 zu der obersten Operation aus Figur 3. Sie lautet "Löschen des Verbrauchers aus der Menge der auswählbaren Verbraucher". Der Regler löscht also den aktuell ausgewählten Verbraucher aus der Menge der auswählbaren Verbraucher. Die Menge der Verbraucher reduziert sich also um einen, und zwar den zuvor ausgewählten, Verbraucher. Ist diese Operation ausgeführt, prüft der Regler daraufhin die folgende Bedingung der nachfolgenden Verzweigung aus Figur 3. Die Bedingung lautet "Menge der auswählbaren Verbraucher größer als 0?". Der Regler prüft also, ob noch ein Verbraucher auswählbar ist. Ist zumindest noch ein Verbraucher auswählbar, ist die Menge größer als 0. Die Antwort auf die Verzweigungsbedingung wäre also "ja". Geleitet durch die Schnittstelle S3 zu der Figur 2 würde der Regler also wieder die oberste Operation aus der Figur 2, nämlich "Auswahl eines auswählbaren Verbrauchers, dessen Aufnahme zu der Abgabeleistung betraglich die kleinste Differenz aufweist" ausführen. Diese wurde bereits zuvor erläutert. Ist die Antwort auf die Verzweigungsbedingung aus der Figur 3 "nein". so gelangt der Regler über die Schnittstelle S2 zu der Verzweigung aus Figur 6. Die Verzweigung aus Figur 6 hat die Bedingung: "Deutliche und/oder länger anhaltende Änderung mindestens eines Werts der (Mess-)daten?". Der Regler prüft also kontinuierlich und/oder In festen Abständen die Messdaten der Datenein- und/oder Datenausgabe aus Figur 1, nämlich: .Messdaten der Sensoren und/oder Daten des Speichers". Die Messdaten der Sensoren sind jene Daten der Sensoren, die beispielsweise für die Figur 1 eingeführt wurden und/oder in der vorherigen Beschreibung bereits genannt wurden. Ebenfalls wurden Daten des Speichers, insbesondere der des Reglers, eingeführt Diese Daten und die Messdaten werden also von dem Regler überwacht. Um deutliche und/oder länger anhaltende Änderung der (Mess-)daten zu beurteilen, können jeder Größe der Daten eine untere Schwellgröße, eine obere Schwellgröße, ein unterer Gradientenschwellwert und/oder ein oberer Gradientenschwellwert vorgegeben sein. Detektiert der Regler keine deutliche und/oder länger anhaltende Änderung mindestens eines Werts der (Mess-)daten ("nein"), so wiederholt der Regler die Prüfung erneut. Diese Schleife des Ablaufplans ist auch in Figur 6 dargestellt. Von der rechten Spitze der Raute wegführend zeigt die Pfeillinie wieder auf die obere Spitze der Raute, also dem Eingang der Verzweigung. Detektiert der Regler beispielsweise eine deutliche und/oder länger anhaltenden Änderung mindestens eines Wertes der (Mess-)daten, so beispielsweise der Lichtintensität, so ist die Antwort auf die Verzweigungsbedingung "ja". Der Regler führt sodann die Operation der Figur 6 aus. Diese lautet "Rücksetzen der Menge der auswählbaren Verbraucher auf eine feste Anfangsmenge". Für die Heizungsanlage gibt es also eine feste Anfangsmenge von auswählbaren Verbrauchern. Diese sind vorzugsweise alle Verbraucher der Heizungsanlage. Für Figur 3 wurde bereits eingeführt, dass diese Menge schrittweise reduzierbar ist. Da nach einer deutlichen und/oder länger anhaltenden Änderung mindestens eines Wertes der (Mess-)daten die Heizungsanlage in einem möglicherweise deutlich anderen Zustand ist, ist es notwendig, dass dem Regler alle auswählbaren Verbraucher zunächst zur Verfügung stehen. Ist die Operation der Figur 6 ausgeführt, wechselt der Regler (durch die Schnittstelle 3) zu der obersten Operation aus Figur 2, die bereits zuvor erläutert wurde. Auch wurde die oberste Verzweigung aus der Figur 2 bereits erläutert. Ist die Antwort auf die Verzweigungsbedingung der oberen Verzweigung aus Figur "ja", so prüft der Regler die Verzweigungsbedingung der unteren Verzweigung aus Figur 2. Diese lautet "Vorlauftemperatur kleiner als die oder gleich der Abgabetemperatur?". Der Regler prüft also, ob die Vorlauftemperatur des ausgewählten Verbrauchers (ausgewählt durch die oberste Operation aus Figur 2) kleiner als die oder gleich der Abgabetemperatur der Leistungsquelle ist. Ist diese Bedingung nicht erfüllt und lautet die Antwort auf die Verzweigungsbedingung also "nein", so führt der Regler die oberste Operation aus der Figur 3 aus. Diese und alle weiteren damit verknüpften Elemente wurden bereits erläutert. Ist die Verzweigungsbedingung der unteren Verzweigung aus Figur 2 erfüllt und die Antwort lautet also "ja". so führt der Regler die unterste Operation aus der Figur 2 aus. Diese lautet "Stellen des Ventils des entsprechenden Verbrauchers, sodass zumindest ein Tellstrom zu diesem gelenkt wird". Da die Heizungsanlage Signalverbindungen zwischen den Ventilen und dem Regler aufweist, kann der Regler die Ventile jeweils separat stellen. Der Regler generiert dazu entsprechende Stellgröße. Wurde auf diese Weise beispielsweise zunächst der Verbraucher 14a aus Figur 1 nicht ausgewählt, in den zweiten Durchlauf hingegen der Verbraucher 14b, so stellt der Regler 20 das Ventil 10a in der Weise, dass kein Volumenstrom durch den Verbraucher 14a. geführt wird und das Ventil 10b in der Weise, dass zumindest ein Teilstrom durch den Verbraucher 14b geleitet wird. Ist das Ventil 10b ein Schaltventil, so wird der vollständige Volumenstrom aus der Hauptleitung 8 durch den Verbraucher 14b fließen. Hierbei ist Folgendes zu beachten: Ventile, die nicht explizit durch den Regler gestellt werden, lenken den vollständigen Volumenstrom an dem entsprechenden Verbraucher vorbei.

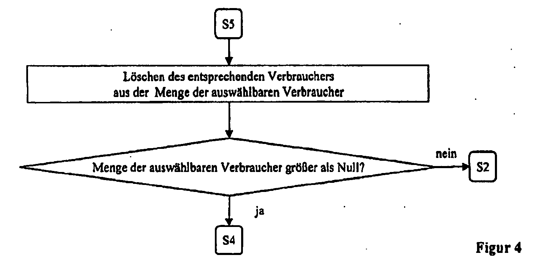

Ist die unterste Operation aus Figur 2 ausgeführt, so folgt daraufhin (geleitet durch die Schnittstelle S5) die oberste Operation aus Figur 4 ausgeführt. Sie lautet: "Löschen des entsprechenden Verbrauchers aus der Menge der auswählbaren Verbraucher". Der aktuelle Verbraucher wird also aus der Menge der auswählbaren Verbraucher gelöscht. Daraufhin prüft der Regler die Verweigungsbedigungen der folgenden Verzweigung. Sie lautet: "Menge der auswählbaren Verbraucher größer 0?". Diese Verzweigung wurde bereits analog erläutert, sodass entsprechendes auch für diese Verzweigung gilt. Ist die Verzweigungsbedingung nicht erfüllt und lautet die Antwort also "nein", so prüft der Regler sodann die Verzweigungsbedingung der Verzweigung aus Figur 6, die bereits auch erläutert wurde. Ist die Verzweigungsbedingung der Verzweigung aus Figur 4 erfüllt und lautet die Antwort also "ja", so führt der Regler die oberste Operation aus der Figur 5 aus. Sie lautet: "Auswahl eines auswählbaren Nachverbrauchers, dessen Aufnahmeleistung zu der Verbraucherabgabeleistung des vorherigen Verbrauchers betraglich die kleinste Differenz aufweist". Der Regler prüft also auch die Verbraucherabgabeleistung des Vorverbrauchers. Sodann vergleicht der Regler diese Verbraucherabgabeleistung mit den jeweiligen Aufnahmeleistungen der auswählbaren Nachverbraucher. Der Regler wählt sodann denjenigen Nachverbraucher aus, dessen betragliche Differenz zwischen der jeweiligen Aufnahmeleistung und der Verbraucher-. abgabeleistung am kleinsten ist. Dieser ausgewählte Verbraucher ist sodann der Nachverbraucher. Daraufhin prüft der Regler die Verzweigungsbedingung der obersten Verzweigung aus Figur 5. Sie lautet: "Aufnahmeleistung kleiner als die Verbraucherabgabeleistung?". Der Regler prüft also, ob die Aufnahmeleistung des Nachverbrauchers kleiner als die Verbraucherabgabeleistung des Vorverbrauchers ist. Ist diese Verzweigungsbedingung nicht erfüllt, so führt der Regler die oberste Operation aus der Figur 4 aus. Die entsprechenden nachfolgenden Elemente als auch die Operation aus Figur 4 wurden bereits erläutert. Ist die Verzweigungsbedingung der obersten Verzweigung aus Figur 5 erfüllt und lautet die Antwort also "ja", so prüft der Regler daraufhin die Verzweigungsbedingung der mittleren Verzweigung aus Figur 5. Sie lautet "Vorlauftemperatur kleiner als die oder gleich der Verbraucherabgabetemperatur?". Der Regler prüft also, ob die, insbesondere vorgebbare, Vorlauftemperatur des Nachverbrauchers kleiner als die oder gleich der Verbraucherabgabetemperatur des Vorverbrauchers ist. Ist die Bedingung nicht erfüllt und lautet die Antwort also "nein", so führt der Regler die oberste Operation aus der Figur 4 aus. Diese und alle weiteren damit verbundenen Elemente wurden bereits erläutert. Ist die Verzweigungsbedingung der mittleren Verzweigung aus Figur 5 erfüllt und lautet die Antwort also "ja", so prüft der Regler daraufhin die Verzweigungsbedingung der unteren Verzweigung aus Figur 5. Sie lautet "Summe der Aufnahmeleistungen kleiner als die oder gleich der Abgabeleistung?". Der Regler prüft also, ob die Summe der Aufnahmeleistungen der durchflossenen Verbraucher, insbesondere inklusive der Aufnahmeleistung des Nachverbrauchers, kleiner als die oder gleich der Abgabeleistung der Leistungsquelle ist. Ist die Verzweigungsbedingung nicht erfüllt und lautet die Antwort also "nein", so wird die oberste Operation aus der Figur 4 ausgeführt. Ist die Verzweigungsbedingung hingegen erfüllt und lautet die Antwort also "ja", wird die unterste Operation aus der Figur 5 ausgeführt. Sie lautet "Stellen des Ventils des entsprechenden Verbrauchers, sodass zumindest ein Teilstrom zu diesem gelenkt wird". Der Regler stellt also das Ventil des ausgewählten Nachverbrauchers, sodass zu dem Nachverbraucher zumindest ein Teilstrom des Vorverbrauchers gelenkt wird. Daraufhin führt der Regler die oberste Operation aus der Figur 4 aus.

Grundsätzlich weist der Ablaufplan keinen Anfangs- oder Endpunkt auf. Der Ablauf des Ablaufplans kann also "endlos" durch den Regler ausgeführt werden.

## Patentansprüche

1. Verfahren zur Regelung, welches in einer Anlage ausgeführt wird, die einen Sonnenkollektor als Leistungsquelle, eine Pumpe, eine Hauptleitung und mindestens ein Ventil in einem Heizkreislauf sowie mehrere Verbraucher aufweist, wobei
i. die Hauptleitung zumindest teilweise von einem fluiden Energieträgermedium durchflossen ist,
ii. die Leistungsquelle darauf eingerichtet ist, eine bestimmte, insbesondere die maximal verfügbare, momentane Abgabeleistung an das Energieträgermedium zu übertragen, und
iii. die Verbraucher jeweils einen momentanen Aufnahmeleistungsbedarf aufweisen, **dadurch gekennzeichnet, dass**
ein Regler (20) das mindestens eine Ventil (10) in der Weise stellt, dass zumindest ein Teilstrom des fluiden Energieträgermediums zu derjenigen hier sogenannten ersten Verbraucher der mehreren Verbraucher (14), deren Aufnahmeleistung kleiner als die Abgabeleistung ist, gelenkt wird, dessen Aufnahmeleistung zu der Abgabeleistung betraglich die kleinste Differenz aufweist.

2. Verfahren nach dem vorhergehenden Anspruch, **dadurch gekennzeichnet, dass** die Leistungsquelle (4) ein Vakuumröhrenkollektor und/oder Flachkollektor oder Parabolrinnenkollektor ist.

3. Verfahren nach einem der vorhergehenden Ansprüche, **dadurch gekennzeichnet, dass** mehrere der oder alle Verbraucher (14) jeweils eine Verbrauchervorlaufleitung (16) und eine Verbraucherrücklaufleitung (18) aufweisen und/oder das Energieträgermedium die Leistungsquelle mit einer Abgabetemperatur verlässt und/oder der Regler (20) durch ein Stellen der Pumpe (6) die Abgabetemperatur auf eine vorgebbare Verbrauchervorlaufsolltemperatur, insbesondere die Vorlauftemperatur des ersten Verbrauchers, regelt.

4. Verfahren nach einem der vorhergehenden Ansprüche, **dadurch gekennzeichnet, dass** der Regler (20) die Abgabetemperatur auf eine Verbrauchervorlaufsolltemperatur regelt, die kleiner als eine maximale oder gleich der maximalen Abgabetemperatur ist.

5. Verfahren nach einem der vorhergehenden Ansprüche, **dadurch gekennzeichnet, dass** die, insbesondere maximale, Abgabeleistung aus einem Leistungskennfeld und/oder die maximale Abgabetemperatur aus einem Temperaturkennfeld ermittelt werden, welche jeweils Abgabetemperaturen, Kollektorrücklauftemperaturen, Kollektorvolumenströme, Lichtintensitäten, Umwelttemperaturen, Kollektorflächen, Kollektorerdwinkel, Kollektorazimutwinkel und/oder Kollektorwirkungsgrade zueinander tabellieren.

6. Verfahren nach einem der vorhergehenden Ansprüche, **dadurch gekennzeichnet, dass** die Ermittlung der, insbesondere maximalen, Abgabeleistung und/oder der maximalen Abgabetemperatur folgende Schritte umfasst:
Messen der Abgabetemperatur, der Kollektorrücklauftemperatur, des Kollektorvolumenstroms, der Lichtintensität, der Umwelttemperatur, der Kollektorfläche, des Kollektorerdwinkels, des Kollektorazimutwinkels und/oder des Kollektorwirkungsgrads; danach
Ermitteln der, insbesondere maximalen, Abgabeleistung, wobei die Abgabetemperatur, die Kollektorrücklauftemperatur, der Kollektorvolumenstrom, die Lichtintensität, die Umwelttemperatur, die Kollektorfläche, der Kollektorerdwinkel, der Kollektorazimutwinkel und/oder der Kollektorwirkungsgrad jeweils durch ihren gemessenen und/oder, insbesondere von außen, vorgebbaren Wert festgelegt sind.

7. Verfahren nach einem der vorhergehenden Ansprüche, **dadurch gekennzeichnet, dass** das Energieträgermedium einen hier sogenannten Vorverbraucher der Verbraucher (14) und/oder einen dem Vorverbraucher zugeordneten Strömungssammler (12) mit einer Verbraucherabgabeleistung und/oder mit einer Verbraucherabgabetemperatur verlässt und/oder der Regler (20) ein Ventil (10) desjenigen hier Nachverbraucher genannten der nachfolgenden Verbraucher (14), dessen Aufnahmeleistung zu der Verbraucherabgabeleistung des Vorverbrauchers betraglich die kleinste Differenz aufweist in der Weise stellt, dass zumindest ein Teilstrom des fluiden Energieträgermediumstroms des Vorverbrauchers, insbesondere direkt, zu dem Nachverbraucher gelenkt wird..

8. Verfahren nach dem vorhergehenden Anspruch, **dadurch gekennzeichnet, dass** die Aufnahmeleistung eines Nachverbrauchers kleiner als die oder gleich der Verbraucherabgabeleistung eines direkten Vorverbrauchers ist und/oder die, insbesondere vorgebbare, Vorlauftemperatur eines Nachverbrauchers kleiner als die oder gleich der Verbraucherabgabetemperatur eines direkten Vorverbrauchers ist.

## Claims

1. A method for regulating, which is carried out in an installation which, in a heating circuit, has a solar energy collector as a power source, a pump, a main line and at least one valve, also a plurality of consumers, wherein
i. a liquid energy-carrying medium flows through the main line at least in part,
ii. the power source is established to transfer a certain, in particular the maximum available, momentary output power to the energy-carrying medium, and
iii. the consumers each have a momentary input power requirement, **characterised in that**
a regulator (20) sets the at least one valve (10) such that at least a part of the flow of the liquid energy-carrying medium is steered towards what is referred to here as the first consumer of the plurality of consumers (14) whose input power is less than the output power, the input power of the first consumer having, in terms of amount, the smallest difference to the output power.

2. The method according to the previous claim, **characterised in that** the power source (4) is a vacuum pipe collector and/or flat plate collector or parabolic trough collector.

3. The method according to one of the previous claims, **characterised in that** a plurality of or all the consumers (14) each have a consumer flow line (16) and a consumer return line (18) and/or the energy-carrying medium leaves the power source with an output temperature and/or the regulator (20), by a setting of the pump (6), regulates the output temperature to a predefinable nominal consumer flow temperature, in particular the flow temperature of the first consumer.

4. The method according to one of the previous claims, **characterised in that** the regulator (20) regulates the output temperature to a nominal consumer flow temperature which is less than a maximum or the same as the maximum output temperature.

5. The method according to one of the previous claims, **characterised in that** the, in particular maximum, output power and/or the maximum output temperature are determined out of a power map and/or out of a temperature map, which each tabulate output temperatures, collector return flow temperatures, collector volume flows, light intensities, ambient temperatures, collector surfaces, collector angles relative to earth, collector azimuth angles and/or collector efficiency levels with each other.

6. The method according to one of the previous claims, **characterised in that** the determination of the, in particular maximum, output power and/or the maximum output temperature comprises the following steps:
Measuring the output temperature, the collector return flow temperature, the collector volume flow, the light intensity, the ambient temperature, the collector surface, the collector angle relative to earth, the collector azimuth angle and/or the collector efficiency level; thereafter
Determining the, in particular maximum, output power, wherein the output temperature, the collector return temperature, the collector volume flow, the light intensity, the ambient temperature, the collector surface, the collector angle relative to earth, the collector azimuth angle and/or the collector efficiency level are each set by means of their measured and/or, in particular from outside, predefinable value.

7. The method according to one of the previous claims, **characterised in that** the energy-carrying medium leaves what is referred to here as an upstream consumer of the consumers (14), and/or a flow collector (12) assigned to the upstream consumer, with a consumer output power and/or with a consumer output temperature, and/or the regulator (20) sets a valve (10) of what is known here as the downstream consumer of the subsequent consumers (14), whose input power has the smallest difference in terms of amount to the consumer output power of the upstream consumer, such that at least a part of the flow of the liquid energy-carrying medium of the upstream consumer is steered, in particular directly, towards the downstream consumer.

8. The method according to the previous claim, **characterised in that** the input power of a downstream consumer is less than the or the same as the consumer output power of a direct upstream consumer and/or the, in particular predefinable, flow temperature of a downstream consumer is less than the or the same as the consumer output temperature of a direct upstream consumer.

## Revendications

1. Procédé de réglage, qui est réalisé dans une installation qui présente un capteur solaire en tant que source de puissance, une pompe, une conduite principale et au moins une vanne dans un circuit de chauffage ainsi que plusieurs consommateurs,
i. la conduite principale étant parcourue au moins partiellement par un milieu vecteur d'énergie fluide,
ii. la source de puissance étant aménagée pour transmettre au milieu vecteur d'énergie une puissance produite momentanée définie, en particulier la puissance produite maximale disponible,
iii. les consommateurs présentant respectivement un besoin de puissance absorbée momentané, **caractérisé en ce**
**qu'**un régulateur (20), qui règle la vanne (10) au moins au nombre de un de telle sorte qu'au moins un flux partiel du milieu vecteur d'énergie fluide est détourné vers le consommateur, appelé ici premier consommateur, parmi les plusieurs consommateurs (14) desquels la puissance absorbée est inférieure à la puissance produite, duquel la puissance absorbée présente la plus petit différence en valeur par rapport à la puissance produite.

2. Procédé selon la revendication précédente, **caractérisé en ce que** la source de puissance (4) est un capteur à tubes sous vide et/ou un capteur plat ou un capteur cylindro-parabolique.

3. Procédé selon l'une des revendications précédentes, **caractérisé en ce que** plusieurs ou tous les consommateurs (14) présentent respectivement une conduite aller de consommateur (16) et une conduite retour de consommateur (18) et/ou **en ce que** le milieu vecteur d'énergie quitte la source de puissance avec une température produite, et/ou le régulateur (20) règle, par un réglage de la pompe (6), la température produite à une température de consigne aller de consommateur pouvant être prédéfinie, en particulier la température aller du premier consommateur.

4. Procédé selon l'une des revendications précédentes, **caractérisé en ce que** le régulateur (20) règle la température produite à une température de consigne aller de consommateur qui est inférieure à une température produite maximale ou est égale à la température produite maximale.

5. Procédé selon l'une des revendications précédentes, **caractérisé en ce que** la puissance produite, en particulier maximale, est déterminée à partir d'un champ caractéristique de puissance et/ou **en ce que** la température produite maximale est déterminée à partir d'un champ caractéristique de température qui dressent respectivement le tableau de températures produites, de températures retour de capteur, de flux volumiques de capteur, d'intensités lumineuses, de températures ambiantes, de surfaces de capteur, d'angles de capteur, d'angles azimutaux de capteur et/ou de rendements de capteur les uns par rapport aux autres.

6. Procédé selon l'une des revendications précédentes, **caractérisé en ce que** la détermination de la puissance produite, en particulier maximale, et/ou de la température produite maximale comprend les étapes suivantes :
mesure de la température produite, de la température retour de capteur, du flux volumique de capteur, de l'intensité lumineuse, de la température ambiante, de la surface de capteur, de l'angle de capteur, de l'angle azimutal de capteur et/ou du rendement de capteur ; ensuite
détermination de la puissance produite, en particulier maximale, la température produite, la température retour de capteur, le flux volumique de capteur,
l'intensité lumineuse, la température ambiante, la surface de capteur, l'angle de capteur, l'angle azimutal de capteur et/ou le rendement de capteur étant stipulés respectivement par leur valeur mesurée et/ou pouvant être prédéfinie, en particulier de l'extérieur.

7. Procédé selon l'une des revendications précédentes, **caractérisé en ce que** le milieu vecteur d'énergie quitte un consommateur, appelé ici pré-consommateur, parmi les consommateurs (14) et/ou un collecteur d'écoulement (12) affecté au pré-consommateur avec une puissance produite de consommateur et/ou avec une température produite de consommateur, et/ou le régulateur (20) règle une vanne (10) du consommateur (10), appelé ici post-consommateur, parmi les consommateurs suivants dont la puissance absorbée présente en valeur, par rapport à la puissance produite de consommateur du pré-consommateur, la plus petite différence de telle sorte qu'au moins un flux partiel du flux du milieu vecteur d'énergie fluide du pré-consommateur est dévié, en particulier directement, vers le post-consommateur.

8. Procédé selon la revendication précédente, **caractérisé en ce que** la puissance absorbée d'un post-consommateur est inférieure ou égale à la puissance produite de consommateur d'un pré-consommateur direct et/ou **en ce que** la température aller, en particulier pouvant être prédéfinie, d'un post-consommateur est inférieure ou égale à la température produite de consommateur d'un préconsommateur direct.
